# FASCICULE DE BREVET EUROPEEN

(11) **EP 2 464 711 B1**
(45) Date de publication et mention de la délivrance du brevet: **10.02.2016**
(21) Numéro de dépôt: 10757233.1
(22) Date de dépôt: 03.08.2010
(51) Int. Cl.: C09K 21/14, E21F 5/08, E21F 5/12

(54) **EAU DE TREMPE UTILISEE COMME MOYEN DE LUTTE CONTRE LES RISQUES D'INCENDIE ET D'EXPLOSION DES MATERIAUX ORGANIQUES EXTRACTIFS**
EINWEICHLAUGE ALS MITTEL ZUR STEUERUNG DES FEUER- UND EXPLOSIONSRISIKOS ORGANISCHER EXTRAKTIONSMATERIALIEN
STEEPING LIQUOR USED AS A MEANS OF CONTROLLING THE RISK OF FIRE AND EXPLOSION OF ORGANIC EXTRACTIVE MATERIALS

(30) Priorité: 11.08.2009 FR 0903919
(43) Date de publication de la demande: 20.06.2012
(73) Titulaire: IEC Europe S.À.R.L., 2661 Luxembourg (LU)
(72) Inventeur: TERRAZ, Denis, F-34170 Castelnau le Lez (FR)
(74) Mandataire: Gosse, Michel
(86) Numéro de dépôt international: PCT/FR2010/000563
(87) Numéro de publication internationale: WO 2011/018561

(56) Documents cités:
- WO-A1-91/00866
- DE-A1- 1 758 196
- DE-B- 1 264 369
- FR-A1- 2 874 022
- GB-A- 1 492 238
- US-A1- 2006 180 786

## Description

### DOMAINE DE L'INVENTION

L'invention concerne l'utilisation d'une eau de trempe concentrée, dénommée « corn steep », issue de l'industrie amidonnière, comme moyen de lutte contre les risques d'incendie provoqués par l'auto-échauffement et les risques d'explosion de poussières induits par les particules et microparticules contenues dans des matériaux à poussières organiques inflammables provenant de l'industrie extractive ainsi que par les gaz explosibles dégagés lors du processus d'auto-échauffement, lors de leur stockage, leur transport et/ou leur manipulation.

### ARRIERE PLAN TECHNOLOGIQUE

Les matériaux issus de l'industrie extractive (mines, carrières, industries transformatrices, etc) sont, lorsqu'ils sont constitués de matières organiques inflammables, à l'origine d'incendies par auto-échauffement liées aux caractéristiques de ces matériaux et d'explosions liées aux poussières organiques induites par lesdits matériaux et au dégagement de gaz explosible par suite de l'auto-échauffement, lors de leur stockage, leur transport et/ou leur manipulation.

Concernant la limitation des émissions de poussières, divers procédés liés à la protection du personnel ainsi qu'au respect de l'environnement ont été développés. Concernant la limitation des risques d'explosion dans l'industrie extractive de matières organiques inflammables, à partir de produits contenant de l'amidon, on peut citer le document GB 1492238 qui décrit, dans le cadre des opérations d'extraction du charbon d'un filon houiller, un procédé consistant en une injection de produit dans des trous forés pour l'extraction du charbon, afin de créer une rupture hydraulique du filon houiller pour éliminer partiellement le méthane, oxydé par voie microbienne, à base de bactéries, et pour humidifier les poussières, réduisant ainsi les poussières pendant le lavage du charbon. Ledit procédé utilise une composition aqueuse à haute viscosité comprenant des produits dits chimiques et de l'amidon. En outre, au-delà de l'injection du produit à haute viscosité, le procédé en question rajoute de l'air comprimé, une solution d'acide chlorhydrique dans le filon houiller lors de l'extraction, solution par ailleurs chauffée préférentiellement à plusieurs centaines de degrés, puis une injection de vapeur, afin d'éliminer les condensais.

Autrement dit, ledit procédé a pour objet l'élimination, de façon lourde (solution à haute viscosité agissant par voie bactérienne avec injection complémentaire d'une solution d'acide chlorhydrique chauffée à plusieurs centaines de degrés, puis de vapeur) le méthane contenu dans le charbon lors de l'extraction, ce qui a pour effet d'éviter les poussières lors de l'extraction et du lavage.

On peut également citer le document DE1758196 qui concerne la diminution des risques de dépôt et d'explosion des poussières de charbon (et de pierre) lors de l'extraction mécanisée souterraine par l'utilisation, comme agents mouillants, de sels de calcium et de chlorure de magnésium et d'additifs comme l'amidon et/ou la cellulose.

On peut enfin citer le document DE1264369 qui concerne l'utilisation de l'eau sous pression pour faciliter l'extraction de la houille (ou d'un minéral) et pour réduire les poussières par accroissement de la viscosité et la formation de particules de diamètre compris entre 0,3 et 2 mm. Des agents floculants (dérivés de l'amidon), mouillants et émulsifiants peuvent être également utilisés.

Aucun de ces documents ne traite des problèmes spécifiques liés aux risques d'incendie provoqués par l'auto-échauffement et au risque d'explosion liés à la finesse des particules et plus particulièrement des microparticules desdits matériaux, une fois extraits (explosion de poussières), au risque d'explosion induit par le dégagement de gaz explosible (monoxyde de carbone) par suite de l'auto-échauffement (explosion de gaz) ou au risque d'une explosion hybride des poussières et de gaz, lors de leur stockage, leur transport et/ou leur manipulation.

En revanche, concernant la prévention desdits risques, diverses techniques de prévention et de suivi ont été mises en place sans qu'aucune de celles-ci n'ait, à ce jour, pris en compte la finesse des particules des matériaux et la fixation d'humidité par condensation qui sont les causes principales pouvant conduire à un incendie par suite d'un auto-échauffement ou à une explosion, de poussières, de gaz ,ou hybride (poussières et gaz)

Les données énumérées ci-après, qui sont nécessaires à la compréhension du cheminement scientifique et expérimental qui a conduit à la découverte de caractéristiques méconnues relatives aux eaux de trempe concentrées, proviennent du rapport final de l'INERIS convention CECA n°7262/03/307/03 de 1996 intitulé « Etude de sécurité incendie et explosion des installations houillères jour et sidérurgiques », ainsi que des données de ce même organisme concernant les matériaux organiques dégageant des poussières inflammables.

### Analyse du phénomène d'inflammation par auto-échauffement des matériaux organiques extractifs

Le stockage des charbons et des cokes, et par extension : les matériaux organiques d'origine extractive, induit des sources potentielles d'incendie consécutivement à un auto-échauffement des produits. Ce risque concerne le principal danger de ce genre d'installation.

Les phénomènes d'auto-échauffement du coke et du charbon, dépendent essentiellement :
- de la dimension critique du stockage qui est dans la plupart des cas dépassée ;
- des réactions d'oxydation s'effectuant à l'intérieur du produit ;
- de la température initiale ;
- de la fixation d'humidité.

Si les vitesses d'oxydation de charbon ou de coke sont plus ou moins faibles en fonction de leur réactivité, elles jouent toutefois un rôle important pour des stockages de grandes dimensions où la dimension critique est largement dépassée. Par ailleurs, cette vitesse d'oxydation qui progresse avec l'élévation de la température, augmente également lorsque la taille du grain des matériaux en stockage diminue, puisque la surface spécifique susceptible de s'ajuster, augmente fortement dans ce cas. De plus, la fixation d'humidité par condensation dans le stockage participe fortement à l'élévation de la température de stockage, ce qui accélère les phénomènes d'oxydation et bien entendu l'auto-échauffement. En effet, une condensation de l'ordre de 1% d'humidité environ, induit une augmentation de la température importante de l'ordre de 20°C.

Généralement, le déclenchement d'un feu, pour la plupart des charbons ou des cokes, nécessite un apport d'énergie complémentaire sous forme d'énergie minimale d'inflammation pour dépasser la barrière de l'énergie d'activation du système. Pour avoir une combustion, il est aussi nécessaire d'atteindre la température minimale à laquelle la réaction avec développement de flamme se produira. Cette température est appelée température d'inflammation.

Avec des substances à haut poids moléculaire comme le charbon ou le coke, la décomposition doit d'abord se produire bien avant d'atteindre la température d'inflammation. Ces phénomènes prennent un certain temps appelé période d'induction. On ne parle d'inflammation que si une flamme est visible.

La période d'induction est réduite lorsque la température augmente. Elle dépend aussi de la pression, dé la concentration en combustible, du type de matériau, donc de sa réactivité et de ses additifs contenus. Plus le volume de l'échantillon est important, plus l'accumulation de chaleur sera facile.

Pour éviter les risques liés à l'auto-échauffement, il convient ainsi, soit de stocker le charbon ou le coke en quantités inférieures au volume critique pour une température du dépôt donnée, soit de travailler sous atmosphère inerte. Dans la réalité, ces deux possibilités ne sont pas réalisées, la dimension critique étant en général faible (quelques mètres) et le stockage sous atmosphère inerte n'étant pas envisageable pour les stockages à l'air libre.

La vitesse d'oxydation des charbons ou des cokes à la température ambiante est très faible et ne joue un rôle effectif dans le phénomène d'auto-échauffement que pour des tas de grandes dimensions et après un temps très long. Il s'agit du temps nécessaire pour passer de la température de stockage du charbon ou du coke (température ambiante) à une température de l'ordre de 70-80°C au-delà de laquelle l'auto-échauffement a lieu.

Par ailleurs, la vitesse d'oxydation augmente lorsque la taille des grains diminue. En effet, lorsque la granulométrie diminue, la surface spécifique des grains augmente et donc aussi la surface susceptible de réagir avec l'oxygène de l'air.

La teneur en pyrite est également un facteur influant sur la vitesse d'oxydation. La présence de pyrite sous forme de petites particules bien dispersées (grande surface spécifique) favorise l'auto-échauffement tandis que la présence de pyrite massive n'entraîne pas d'augmentation significative de la vitesse d'échauffement.

Néanmoins, une telle réaction ne peut servir qu'à amorcer l'échauffement car la pyrite ne s'oxyde rapidement qu'en atmosphère très humide. A partir de 80°C, il est vraisemblable que le charbon sèche rapidement mais la vitesse d'oxydation du charbon lui-même a alors atteint une valeur suffisante pour que l'échauffement par oxydation chimique se poursuive.

D'où l'importance, au-delà de leur réactivité propre du charbon et/ou du coke, de la finesse des particules de charbon ou de coke et de la fixation d'humidité par condensation dans le phénomène d'inflammation par auto-échauffement.

### Analyse du phénomène d'explosion de poussière ou hybride (poussières et gaz) émises par des matériaux organiques extractifs

L'explosion est une combustion rapide d'un mélange de gaz, de poussières de charbon ou des deux, avec l'air, dans un espace confiné ou partiellement confiné, dans lequel la chaleur dégagée est plus importante que la chaleur perdue dans le milieu.

Dans les industries liées au charbon et aux matériaux analogues, les explosions sont liées à la présence de grandes quantités de poussières formées lors de la manutention ou du broyage des combustibles. Des explosions peuvent aussi être dues aux gaz de pyrolyse ou de combustion incomplète (monoxyde de carbone) formés lors de l'auto-échauffement de dépôt de charbon.

L'énergie dégagée par une source d'inflammation amorce la combustion des particules situées à proximité. Sous l'effet de cette source de chaleur, s'opère alors une pyrolyse des poussières de charbon générant des composés volatils combustibles qui s'enflamment. Les vitesses de réaction sont élevées puisque la surface spécifique du combustible est très importante. Si le nuage est suffisamment dense, le rayonnement et la convection échauffent les particules voisines et l'explosion se propage ainsi de proche en proche.

Le mélange réactif air et particules de charbon « froid » (température ambiante) se transforme en produits de combustion « chauds » (1200-2000°C). Le mélange air particules qui traverse la flamme subit en conséquence une forte dilatation thermique (le volume est multiplié par au moins 5). Le phénomène de dilatation est responsable des effets de pression observés lors d'une explosion dans un espace confiné ou partiellement confiné.

En atmosphère libre, cas des stocks au sol, il est observé seulement une boule de feu avec une très faible surpression, mais avec un effet thermique important. Il s'agit du « flash ».

En enceinte fermée, les effets de pression sont nettement plus importants (surpression maximale de l'ordre de 5 à 10 bars) et peuvent conduire à la destruction des appareils. On parle alors d'explosion.

L'explosion est une combustion particulière mettant en oeuvre les paramètres spécifiques suivants :
- il faut que les poussières soient en suspension pour former une grande surface de contact avec l'air ;
- il faut que la concentration de poussière soit suffisante (supérieure à la concentration minimale explosible) ;
- il faut que l'atmosphère soit confinée pour que la pression puisse augmenter.

Pour supprimer tout risque d'explosion, il suffit de supprimer l'une des composantes participant au phénomène de combustion ou d'inflammation.

Au-delà des caractérisations de combustion et d'inflammation des poussières nécessaires pour qu'une explosion de poussières organiques puisse avoir lieu, diverses conditions concernant les poussières et leur finesse, ainsi que la concentration et la combustion de ces poussières dans une atmosphère plus ou moins confinée et tout particulièrement en milieu clos, doivent être remplies.

D'où l'importance de la finesse des particules de charbon ou de coke dans le phénomène d'explosion.

### RESUME DE L'INVENTION

Les essais ont été effectués au moyen de compositions contenant des protéines végétales avec pour objectif de sélectionner celles aptes, simultanément :
- à augmenter la taille des grains en agglomérant durablement les particules et plus particulièrement les microparticules des produits organiques extractifs des types charbons ou cokes ;
- à éviter durablement la fixation d'humidité par condensation en jouant le rôle de mouillant desdites particules et microparticules.

Elles ont porté également sur des compositions faciles à obtenir et à mettre en oeuvre et d'un prix de revient compatible avec l'application considérée.

Les compositions testées, à base de protéines végétales en solution liquide, ont plus particulièrement étaient choisies parmi les eaux de trempe issues de l'industrie amidonnière et plus particulièrement celles issues des grains de maïs selon un procédé qui consiste à ajouter du dioxyde de soufre (SO₂) lors de l'étape de trempe permettant le relargage des divers constituant du maïs (minéraux, acides aminés, phosphate, potasse, ...) pour, après concentration, obtenir une eau de trempe concentrée dite « Corn Steep ».

Afin de rechercher ces caractéristiques fondamentales, des analyses et des essais ont été effectués pendant une période de 90 jours, par le Centre d'Etudes et d'Essais du CEBTp-SOLEN de Montpellier, situé au Millénaire, 685 Rue Louis Lépine, 34000 Montpellier sur une durée s'étendant de juillet à septembre 2008.

Le matériau qui a été retenu, particulièrement sujet à contenir des poussières et au risque d'incendie par auto-échauffement, est le coke de pétrole.

La composition qui a été retenue est le « Corn Steep », eau de trempe concentrée, commercialisé par la Société ROQUETTE sous la référence SOLULYS 048 E.

Ses caractéristiques physiques sont : matière sèche = 48%, C/N = 3,33, matière minérale = 9,4%, matière organique = 38,6%, pH = 4,1, densité = 1,2 g/cm³.

Ses caractéristiques chimiques sont : N total = 3,55%, K₂O sol = 3,05%, P₂O₅ = 3,63%, MgO = 0,7%, Ca = 0,03%, SO₃ = 0,005%.

Cette composition est actuellement utilisée en tant que :
- source hydrocarbonée et azotée comme support de développement par fermentation de souches bactériennes productrices d'antibiotiques, de vitamines ou d'acides aminés et champignons ;
- source azotée pour le développement d'espèce végétale dans le cas de remédiation de sols pollués ou dans le cas de déforestation suite à des incendies, et aménagement des bords d'autoroute ;
- liant pour la fabrication, notamment par extrusion, d'aliments pour animaux et substance nutritionnelle ;
- liant de granulation pour la fabrication de granulés d'engrais et de fertilisants ;
- engrais foliaire pour les arbres fruitiers.

Les essais ont donc été réalisés dans le but de rechercher les spécificités nouvelles et originales liées à d'éventuels aspects agglomérant et mouillant durables en rapport avec l'application concernée.

D'excellents résultats ont été obtenus en diluant à l'eau ladite eau de trempe concentrée et en la mélangeant au matériau à traiter dans des proportions respectives aptes à permettre l'obtention, pour un « indice P » passant à 315 µm, d'un pourcentage de fines au plus égal à 5%.

Ce résultant a été obtenu pour :
- un taux de dilution à l'eau compris entre 2 et 8% ;
- un taux de dosage, par rapport au matériau à traiter, compris entre 3 et 12%.

La mise en oeuvre de la composition testée sur des produits d'origine organique comme les charbons ou les cokes, permet de diminuer très fortement les risques d'incendie consécutifs à des auto-échauffements grâce à l'effet mouillant et à l'agglomération durable des particules, augmentant la taille des grains, réduisant la fixation d'humidité de condensation et évitant toute augmentation en masse de la température ce qui contribue à éviter les phénomènes d'oxydation internes, et par suite stoppe tout effet d'auto-échauffement et d'explosion.

La mise en oeuvre de la composition conduit aussi à une réduction très sensible des dangers sur l'environnement, réduction qui pourra être suivie par une diminution des moyens de prévention et de contrôle, source d'économie financière et notamment en ce qui concerne :
- l'orientation des stocks au sol par rapport aux vents dominants ;
- les effets de cheminées, qui seront supprimés ;
- le compactage qui pourra être évité ;
- la gestion des stocks qui pourra être très allégée ;
- la surveillance des stocks qui pourra être diminuée, notamment en ce qui concerne les contrôles temporels de températures.

La composition végétale testée est un produit contenant des protéines végétales solubles à l'eau issues de graisses de céréales ou de protéagineux et/ou de l'eau de trempe générée par l'industrie amidonnière.

Cette composition, mouillante, naturelle, non toxique et biodégradable de consistance liquide, peut être diluée à l'eau avec une facilité de mise en oeuvre pouvant être utilisée dans différentes techniques d'application comme la pulvérisation, la brumisation, l'atomisation au moyen de rampes adaptées.

Utilisée comme mouillant et fixateur de particules et de microparticules minérales et/ou organiques comme le charbon ou le coke par exemple, elle permet une agglomération durable sur plusieurs mois des dites particules et microparticules et augmente la taille des grains fins.

La mise en oeuvre de cette composition, fonction d'un certain taux de dilution à l'eau et d'un taux de dosage dans sa mise en oeuvre, permet, sur une durée de plusieurs mois :
a) en ce qui concerne les dangers des matériaux à poussières organiques inflammables comme le charbon ou le coke :
   - de diminuer très fortement les risques d'incendie consécutifs aux auto-échauffements grâce à l'agglomération durable des particules augmentant la taille des grains, réduisant la fixation de l'humidité de condensation et permettant d'éviter une augmentation en masse de la température, ce qui contribuent à éviter les phénomènes d'oxydation internes, et à stopper tout effet d'auto-échauffement et d'incendie ;
   - de réduire les risques d'explosion de poussières et/ou de gaz par suite de l'agglomération durable des particules et microparticules et de l'augmentation de la taille des grains ;
   - de diminuer les moyens de prévention mis en place dans le cadre de prévention d'incendie due aux auto-échauffements (orientation des stocks au sol, effet de cheminée, compactage, gestion des stocks, surveillance des stocks, ...) ;
   - de diminuer les distances d'isolement d'incendie et d'explosion déterminées dans le cadre des études de dangers des ICPE (Installations Classées pour la Protection de l'Environnement) ;
b) en ce qui concerne les poussières :
   - de diminuer, voire de supprimer totalement et durablement les envols de poussières en contribuant en outre à une amélioration de qualité de l'air ambiant;
   - de minimiser les effets sur la santé induits par les PM10 et surtout par les PM2,5 présentent dans l'air ambiant et tout particulièrement en ce qui concerne les poussières organiques de charbon et de coke ;
   - de respecter la réglementation et d'éviter dans la majorité des cas, la déclaration annuelle obligatoire concernant les substances polluantes, déclaration qui doit être réalisée à partir d'un seuil de 50 t/an pour les PM10 et un seuil de 150 t/an pour les poussières totales ;
   - de contribuer à la protection de l'environnement en diminuant les gênes environnementales et les effets ou impacts provoqués sur la végétation, l'agriculture, le paysage, l'habitat et les biens matériels, les monuments et le patrimoine architectural ;
c) en ce qui concerne la profitabilité :
   - de réduire les pertes de matières consécutives aux envols éoliens et aux manipulations, ainsi que les déchets ;
   - de minimiser les coûts de surveillance, de contrôle et de prévention ;
   - d'obtenir un gain financier pouvant être conséquent, gain financier pour l'acheteur de la forme (hors prise en compte des diminutions de coûts liés à la surveillance, le contrôle et la prévention) :
   - de diminuer, voire supprimer les coûts de la T.G.A.P. particules (Taxe Générale sur les Activités Polluantes) par suite de l'élargissement de l'assiette T.G.A.P applicable en France depuis le 01/01/2009 et également dans la Communauté Européenne.

### En résumé :

- l'invention concerne les activités après extraction, à savoir : le stockage, le transport et/ou la manipulation ;
- la composition, objet de l'invention, n'est pas utilisée pendant l'extraction et n'est pas utilisée comme humidifiant pendant le lavage : elle est utilisée après, lors du stockage ou des manipulations et agit en tant que mouillant, ce qui lui confère une durabilité pérenne sur plusieurs mois, permettant d'éviter l'auto-échauffement du matériau organique (charbon ou coke) et les envols de poussières par son effet de granulation due au caractère mouillant et non au caractère d'humidifiant du document GB 1492238 et non l'oxydation ou l'élimination partielle du méthane.

En outre, ledit document utilise une composition aqueuse à haute viscosité comprenant des produits dits chimiques et de l'amidon, alors que la composition, objet de l'invention, utilise des produits naturels et biologiques issus de l'industrie amidonnière.

Le remplacement de la composition utilisée dans le document GB 1492238 par celle objet de l'invention, ne peut avoir les mêmes effets lors de l'extraction et n'aurait d'ailleurs aucun effet puisqu'elle ne peut agir que sur des matériaux déjà extraits à granulométrie plus ou moins fine, ce qui n'est pas le cas des matériaux à extraire, qui sont en masse comme dans les filons houillers.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux figures annexées.

Sur ces figures:
- la figure 1 est la représentation graphique, à différentes périodes de temps, du pourcentage de passants en fonction de l'ouverture du tamis en mm ;
- la figure 2 est la représentation graphique de la variation (en %), dans le temps (en jours), du passant à 0,315 mm ;
- la figure 3 est la représentation graphique, à des taux de dilution différents (3, 5 et 7%), du passant à 0,315 mm (en valeurs corrigées au taux de 45,6%) en fonction du pourcentage de solution sur fraction 0/Dmax.

### DESCRIPTION DETAILLEE DE L'INVENTION

Les essais ont comporté :
- un suivi d'évolution de la granulométrie, de la teneur en eau et de la masse volumique apparente d'un stock témoin de matériaux traité situé sur l'emprise du terminal vraquier du Port Sud de France à Sète, sur la période juillet-septembre 2008, par le CEBTP/SOLEN de Montpellier, puis par l'inventeur de octobre 2008 à juillet 2009 en ce qui concerne le suivi des températures, afin de garantir des conditions extérieures représentatives (le stock témoin représentant une masse d'environ 50 t) ;
- une étude d'optimisation permettant de préciser l'évolution du pourcentage de fines et de la masse volumique apparente en faisant varier le pourcentage de la composition testée dans un mélange dilué à l'eau, puis en faisant varier le pourcentage de ce mélange, dénommé dosage, par rapport à la quantité de matériaux traités.

Le suivi d'évolution a porté plus particulièrement sur :
- la teneur en eau ;
- la masse volumique ;
- la granulométrie.

Le tableau ci-après récapitule les données du suivi concernant la teneur en eau (W) et la masse volumique apparente (p) avec la mise en oeuvre de la composition testée diluée à 5 % de produit pur et dosé à 10 % sur le matériau, dont la masse volumique était avant traitement de 0,720 t/m³.

| **PARAMETRES** | **PERIODE EN JOURS** | | | | |
|---|---|---|---|---|---|
| | 8 | 15 | 30 | 60 | 90 |
| W en % | 5,70 | 7,10 | 7,0 | 5,80 | 6,10 |
| ρ en t/m³ | 0,859 | 0,857 | 0,805 | 0,809 | 0,810 |

Au regard de ce suivi, il peut être constaté que :
- la teneur en eau a peu varié ;
- la masse volumique reste sensiblement inchangée.

Les graphes ci-après visualisent, en fonction du temps, les données du suivi granulométrique, dont le passant à 315 µm, avant la mise en oeuvre de la composition testée, s'élevait à 15 % et celui à 80 µm à 7,7 % (mélange dilué à 5 % et dosé à 10 %). Il est complété par le suivi d'évaluation du pourcentage de passant à 315 µm.

### ANALYSE GRANULOMETRIQUE DU MATERIAU

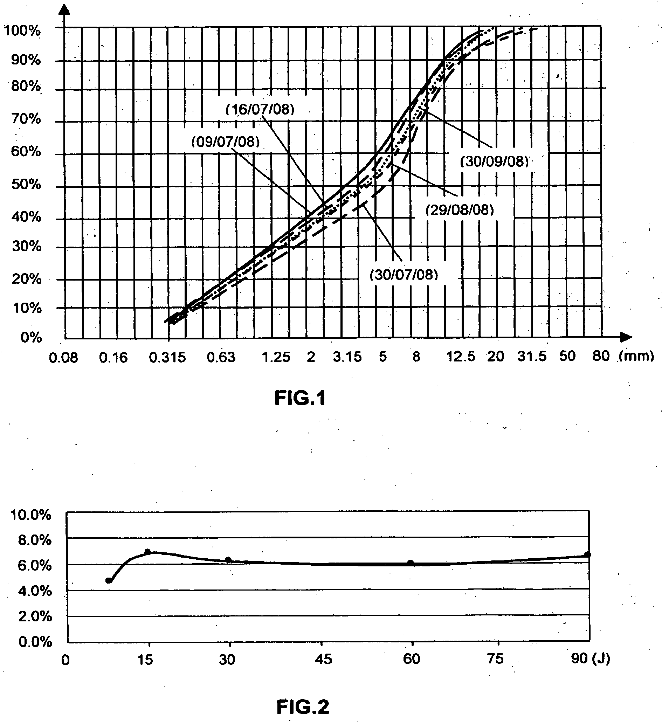

La figure 1 donne, à différentes périodes de temps, le pourcentage de passants en fonction de l'ouverture du tamis en mm ;

La figure 2 donne la variation (en %), dans le temps (en jours), du passant à 0,315 mm.

Les données correspondantes sont extraites du tableau suivant :

| | 09/07108 | 16/07/08 | 30/07/08 | 29/08/08 | 30/09/08 |
|---|---|---|---|---|---|
| Passant à 0,315 mm | 4.7% | 6.6% | 6.1 | 6.1% | 6.4% |

Au regard de ce suivi granulométrique, il apparaît clairement que les particules fines et très fines, en deçà de 315 microns, ont été agglomérées dès la mise en oeuvre de la composition testée, qui a joué le rôle dé mouillant et de fixateur.

Cette agglomération, dont l'intérêt concerne en premier lieu les particules fines et très fines, a porté :
- essentiellement : sur des particules fines et très fines de diamètres inférieurs à 315 µm, dont le passant de l'ordre de 6 % est resté quasiment inchangé sur 3 mois au minimum ;
- accessoirement : sur des grains beaucoup plus gros, allant jusqu'à la taille de 25 mm. Subséquemment, il peut être indiqué que la mise en oeuvre de la composition testée permet de fixer durablement et sur plusieurs mois les particules fines et très fines sources d'envols de poussières.

L'étude d'optimisation permet de préciser l'évolution du pourcentage de fines en fonction du taux de dilution à l'eau de la composition testée et du dosage de cette composition diluée dans le matériau à traiter.

Cette étude, qui a porté sur trois taux de dilution à l'eau de la composition testée, avec 3 %, 5 % et 7 %, a été réalisée, au terme de 3 mois, sur la fraction 0/5 mm du matériau traité (le coke de pétrole), dont les résultats ont été corrigés de façon à prendre eh compte l'intégralité du matériau traité dans toutes ses granulométries.

Le tableau graphe ci-après visualise cette optimisation où il peut être constaté que les courbes correspondant aux taux de dilution de 3 et 5 % tendent à se rejoindre lorsque le taux de dosage augmente (bleu : 3 %, rouge : 5 % et vert : 7 %).

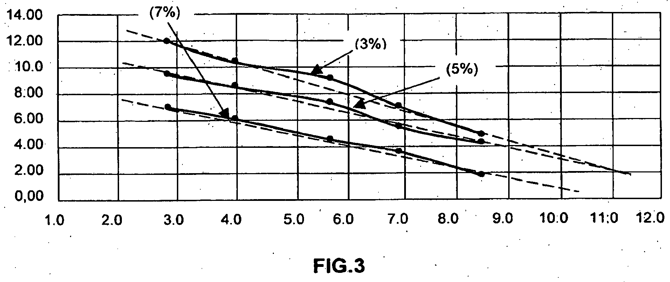

La figure 3 est la représentation graphique, à des taux de dilution différents (3, 5 et 7%), du passant à 0,315 mm (en valeurs corrigées au taux de 45,6%) en fonction du pourcentage de solution sur fraction 0/Dmax.

Le graphe en question est complété par le tableau ci-après qui récapitule les données corrigées arrondies de la forme polynomiale : P = ad + b, où P est le passant en %, d le dosage en % et b une constante issue de l'étude d'optimisation en fonction des taux de dilution avec par exemple : 11,50 = - 0,991 + 12,491 pour d = 1, au taux de dilution de 5%.

| **Dosage du mélange dilué sur le matériau (d)** | **TAUX DE DILUTION DE LA COMPOSITION TESTEE** | | |
|---|---|---|---|
| | **3%** | **5 %** | **7 %** |
| | **P : Passant à 315 µ en %** | **P : Passant à 315 µ en %** | **P : Passant à 315 µ en %** |
| 1 | 14,20 | 11,50 | 9,00 |
| 2 | 12,97 | 10,51 | 8,03 |
| 3 | 11,75 | 9,52 | 7,06 |
| 4 | 10,53 | 8,53 | 6,09 |
| 5 | 9,30 | 7,54 | 5,13 |
| 6 | 8,08 | 6,55 | 4,16 |
| 7 | 6,85 | 5,55 | 3,19 |
| 8 | 5,63 | 4,56 | 2,22 |
| 9 | 4,41 | 3,57 | 1,26 |
| 10 | 3,18 | 2,58 | 0,29 |
| 11 | 1,96 | 1,59 | 0,00 pour 10,3 |
| 12 | 0,73 | 0,60 | - |
| 12,6 | 0,00 | 0,00 | - |
| Forme linéaire | P = -1,224 d+15.422 | P = -0,991 d+12,491 | P = -0,968 d+9,968 |

Ces essais montrent que :
- les passants à 315 µm et les dosages de mélange sont proportionnels et cela quels que soient les taux de dilution de la composition ;
- pour des taux de dilution de 3 % et 5 %, les résultats sont sensiblement identiques à partir de 7 % de mélange dans le produit où les passants à 315 µ sont de l'ordre de 6 % pour atteindre 0 % à 12,6 % environ de mélange ;
- le taux de dilution de 7 % permet d'améliorer très sensiblement les résultats, les passants à 7 % du mélange étant de l'ordre de 3 % pour atteindre 0 à 10,3 % de mélange ;
- un taux de dilution de 6 % peut être extrapolé sans difficulté: il est de la forme polynomiale : P = - 0,952 d + 10,952, avec un passant à 315 µ de 0 pour un dosage de 11,5 %, et un passant de moins de 3 % à 7 % de mélange.

La mise en oeuvre de la composition testée a comme avantages :
- d'agglomérer durablement les particules et microparticules, ce qui permet d'augmenter la taille des grains comme cela a été démontré ci-avant ;
- d'éviter la fixation d'humidité par condensation, la composition testée, diluée entre 5 à 7 % d'eau jouant le rôle de mouillant et de fixateur en agglomérant les particules et microparticules, en évitant par la suite cette fixation d'humidité.

Afin de vérifier ces éléments, les températures internes des stocks ont été relevées dans un stock de coke de pétrole traité avec la composition testée et un stock de coke de pétrole non traité. Cette vérification, dont les données sont reprises au tableau ci-dessous, se passe de commentaires, la température du stock traité n'ayant pas variée (températures repérées à plus de 1 m à l'intérieur des stocks durant les mois de juillet 2008 à juillet 2009).

| **Date** | **Coke vrac T en °C** | **Coke traité T en °C** |
|---|---|---|
| 01/07/08 | 165 | 45 |
| 08/07/08 | 165 | 45 |
| 15.07.08 | 160 | 44,5 |
| 22.07.08 | 155 | 48,3 |
| 29.07.08 | 125 | 31,5 |
| 05.08.08 | 150 | 34,5 |
| 12.08.08 | 145 | 34,5 |
| 19.08.80 | 150 | 33 |
| 26.08.08 | 160 | 30 |
| 22.07.08 | 155 | 48,3 |
| 29.07.08 | 125 | 31,5 |
| 05.08.08 | 150 | 34,5 |
| 12.08.08 | 145 | 34,5 |
| 19.08.80 | 150 | 33 |
| 26.08.08 | 160 | 30 |
| 02.09.08 | 115 | 28,8 |
| 09.09.08 | 130 | 30 |
| 16/09/08 | 120 | 35 |
| 23/09/08 | 150 | 25 |
| 30/09/08 | 142 | 40 |
| 08/10/08 | 120 | 22 |
| 15/10/08 | 122 | 20 |
| 22/10/08 | 130 | 23 |
| 29/10/08 | 145 | 22 |
| 05/11/08 | 140 | 23 |
| 12/11/08 | 95 | 25 |
| 23/12/08 | 110 | 20 |
| 29/01/09 | 117 | 17 |
| 27/02/09 | 105 | 16 |
| 25/03/09 | 110 | 15 |
| 30/04/09 | 117 | 17 |
| 22/05/09 | 103 | 22 |
| 23/06/09 | 105 | 24 |
| 28/07/09 | 100 | 26 |

Selon une variante de réalisation de l'invention, de l'eau de trempe diluée sera mélangée à du savon noir (huile + solution alcaline) pour accroître les propriétés mouillantes de la composition. La proportion correspondante ne dépassera pas les 5%. En résumé, l'invention concerne l'utilisation d'une eau de trempe concentrée, dénommée « corn steep », issue de l'industrie amidonnière, diluée à l'eau et mélangée à des matériaux organiques inflammables issus de l'industrie extractive, comme moyen de lutte contre les risques d'incendie provoqués par l'auto-échauffement et les risques d'explosion de poussières induits par les particules et microparticules contenues dans lesdits matériaux organiques ainsi que les gaz explosibles dégagés lors du processus d'auto-échauffement, lors du stockage, du transport ou de la manipulation desdits matériaux organiques.

Selon des particularités de réalisation de celle-ci :
- l'eau de trempe concentrée est utilisée diluée à l'eau et mélangée au matériau à traiter dans des proportions respectives aptes à permettre l'obtention, pour un « indice P » passant à 315 µm, d'un pourcentage de fines au plus égal à 6% ;
- l'eau de trempe est utilisée diluée avec un taux de dilution à l'eau compris entre 2 et 8%;
- l'eau de trempe ainsi diluée est utilisée additionnée à du savon noir dans une proportion ne dépassant pas 5% ;
- l'eau de trempe ainsi diluée, est utilisée avec un taux de dosage, par rapport au matériau à traiter, compris entre 3 et 12%.

Selon d'autres particularités de réalisation de l'invention :
- l'eau de trempe diluée ainsi obtenue, est pulvérisée, brumisée ou atomisée au moyen de rampes adaptées situées dans la zone des bandes transporteuses successives disposées de manière à faire subir au matériau à traiter des retournements successifs, avec une bonne homogénéité du « Corn Steep », additivé ou non, dans les matériaux à traiter ;
- l'eau de trempe diluée ainsi obtenue, est utilisée pour traiter des matériaux provenant de l'industrie extractive choisis parmi le coke de pétrole, le charbon, le coke de charbon.

## Revendications

1. Utilisation d'une eau de trempe concentrée, dénommée « corn steep », issue de l'industrie amidonnière, diluée à l'eau et mélangée à des matériaux organiques inflammables Issus de l'industrie extractive, comme moyen de lutte contre les risques d'incendie provoqués par l'auto-échauffement et les risques d'explosion de poussières induits par les particules et microparticules contenues dans lesdits matériaux organiques ainsi que les gaz explosibles dégagés lors du processus d'auto-échauffement, lors du stockage, du transport ou de la manipulation desdits matériaux organiques.

2. Utilisation de l'eau de trempe concentrée, selon la revendication 1, diluée à l'eau et mélangée au matériau à traiter dans des proportions respectives aptes à permettre l'obtention, pour un « Indice P » passant à 315 µm, d'un pourcentage de fines au plus égal à 6%.

3. Utilisation de l'eau de trempe diluée, selon la revendication 2, avec un taux de dilution à l'eau compris entre 2 et 8%.

4. Utilisation de l'eau de trempe diluée, selon la revendication 2. additionnée à du savon noir dans une proportion ne dépassant pas 5%.

5. Utilisation de l'eau de trempe diluée, selon la revendication 3 ou 4, avec un taux de dosage, par rapport au matériau à traiter, compris entre 3 et 12%.

6. Utilisation de l'eau de trempe diluée, selon la revendication 5, pulvérisée, brumisée ou atomisée au moyen de rampes adaptées situées dans la zone des bandes transporteuses successives disposées de manière à faire subir au matériau à traiter des retournements successifs, avec une bonne homogénéité du « Corn Steep », additivé ou non, dans les matériaux à traiter.

7. Utilisation de l'eau de trempe diluée, selon la revendication 5, pour traiter des matériaux provenant de l'industrie extractive choisis parmi le coke de pétrole, le charbon, le coke de charbon.

## Patentansprüche

1. Verwendung eines konzentrierten Weichwassers, genannt "Corn Steep", das aus der Stärkeindustrie stammt, verdünnt mit Wasser und gemischt mit entzündbaren organischen Materialien, die aus der mineralgewinnenden Industrie stammen, als Mittel zur Bekämpfung von Brandrisiken, die durch die Selbsterhitzung hervorgerufen werden und Explosionsrisiken von Stäuben, die durch die Partikel und Mikropartikel induziert werden, die in den organischen Materialien sowie den explosionsgefährdeten Gasen enthalten sind, die bei den Prozessen der Selbsterhitzung, bei der Lagerung, beim Transport oder bei der Handhabung der organischen Materialien freigesetzt werden.

2. Verwendung des konzentrierten Weichwassers nach Anspruch 1, verdünnt mit Wasser und gemischt mit dem zu behandelnden Material in entsprechenden Proportionen, die geeignet sind, den Erhalt, für einen "P-Index", der bis 315 µm reicht, eines Prozentsatzes von feinen Pulvern von höchstens gleich 6 % zu ermöglichen.

3. Verwendung des konzentrierten Weichwassers nach Anspruch 2 mit einer Verdünnungsrate in Wasser, die zwischen 2 und 8 % liegt.

4. Verwendung des konzentrierten Weichwassers nach Anspruch 2, zugegeben zu schwarzer Seife in einer Proportion, die 5 % nicht übersteigt.

5. Verwendung des konzentrierten Weichwassers nach Anspruch 3 oder 4 mit einer Dosierungsrate mit Bezug auf das zu behandelnde Material, die zwischen 3 und 12 % liegt.

6. Verwendung des konzentrierten Weichwassers nach Anspruch 5, pulverisiert, zerstäubt oder zersprüht mit Hilfe von angepassten Rampen, die sich im Bereich der Transportbänder befinden, die aufeinander folgend derart angeordnet sind, um das zu behandelnde Material aufeinander folgenden Wendungen mit einer guten Homogenität des "Corn Steep", zugegeben oder nicht, in den zu behandelnden Materialien zu unterziehen.

7. Verwendung des verdünnten Weichwassers nach Anspruch 5, um Materialien zu behandeln, die aus der mineralgewinnenden Industrie stammen, ausgewählt aus Petrolkoks, Kohle, Kohlekoks.

## Claims

1. Use of a concentrated steeping liquor, referred to as "corn steep", from the starch industry, diluted with water and mixed with inflammable organic materials from the extractive industry, as means for combating the fire risks caused by self-heating and dust explosion risks induced by particles and microparticles contained in said organic materials and the explosive gases released during self-heating processes, during the storage, transport or handling of said organic materials.

2. Use of concentrated steeping liquor, according to claim 1, diluted with water and mixed with the material to be treated in respective proportions suitable for making it possible to obtain, for a fines "P index" of 315 µm, a percentage of fines at most equal to 6%.

3. Use of dilute steeping liquor, according to claim 2, with a rate of dilution with water between 2 and 8%.

4. Use of dilute steeping liquor, according to claim 2, supplemented with black soap in a proportion not exceeding 5%.

5. Use of dilute steeping liquor, according to claim 3 or 4, with a rate of dosage, in relation to the material to be treated, between 3 and 12%t.

6. Use of dilute steeping liquor, according to claim 5, sprayed, misted or atomised by means of suitable spray bars situated in the area of the successive conveyor belts arranged so as to apply successive turns to the material to be treated, with a satisfactory homogeneity of the "Corn Steep", optionally supplemented, in the materials to be treated.

7. Use of dilute steeping liquor, according to claim 5, for treating materials from the extractive industries chosen from oil coke, coal, coal coke.
